(19) Europäisches Patentamt

European Patent Office

Office européen des brevets

(11) EP 0 715 605 B1

(12) FASCICULE DE BREVET EUROPEEN

(45) Date de publication et mention
de la délivrance du brevet:
**19.11.1997 Bulletin 1997/47**

(21) Numéro de dépôt: **94924651.6**

(22) Date de dépôt: **22.08.1994**

(51) Int. Cl.⁶: **C02F 1/46**

(86) Numéro de dépôt international:
**PCT/BE94/00050**

(87) Numéro de publication internationale:
**WO 95/06006 (02.03.1995 Gazette 1995/10)**

(54) **PROCEDE ET DISPOSITIF POUR EPURER L'EAU ET PREPARER DES HYDROXYDES METALLIQUES SOLIDES PAR ELECTROLYSE**

VERFAHREN UND VORRICHTUNG ZUR REINIGUNG VON WASSER UND ZUR HERSTELLUNG VON FESTEN METALLHYDROXIDEN MITTELS ELEKTROLYSE

ELECTROLYTIC SOLID METAL HYDROXIDE PREPARATION AND WATER PURIFICATION METHOD AND DEVICE

(84) Etats contractants désignés:
**BE DE FR GB IT NL**

(30) Priorité: **24.08.1993 BE 9300869**

(43) Date de publication de la demande:
**12.06.1996 Bulletin 1996/24**

(73) Titulaire: **SOILS N.V.**
**B-2070 Zwijndrecht (BE)**

(72) Inventeur: **VAN PETEGHEM, A., P.**
**B-8470 Snaaskerke (BE)**

(74) Mandataire:
**De Palmenaer, Roger et al**
**Bureau Vander Haeghen S.A.**
**Rue Colonel Bourg 108 A**
**1030 Bruxelles (BE)**

(56) Documents cités:
**WO-A-92/05116**      **GB-A- 825 629**
**US-A- 2 385 903**      **US-A- 4 948 489**

## Description

La présente invention est relative à un procédé pour épurer une eau usée en vue d'éliminer des composés métalliques par électrolyse, dans lequel on fait passer un courant électrique, par conduction ionique entre une anode (+) et une cathode (-), plongeant dans ladite eau enrichie en oxygène par barbotage d'air ou d'oxygène.

L'invention trouve sa principale application dans les stations d'épuration d'eau pour la précipitation d'hydroxydes et d'autres composés sans avoir à utiliser de réactifs chimiques.

Par le document WO 92/05116 on connaît un procédé de traitement de l'eau par électrolyse, notamment en vue d'éliminer le carbonate de calcium. On choisit pour la cathode un métal dont le potentiel rédox est supérieur au seuil de réduction effective de l'eau, de manière à éviter la réduction de cette eau, et on produit pendant l'électrolyse, les ions OH$^-$ nécessaires à la germination du carbonate de calcium uniquement à partir de l'oxygène dissous dans l'eau. L'acier inoxydable convient parfaitement pour la cathode. Une quantité nécessaire d'oxygène est éventuellement apportée dans l'eau pendant l'électrolyse.

Le document US-A-2,385,903 décrit un procédé de traitement d'un liquide de forage provenant de l'extraction du pétrole. Il s'agit d'une eau résiduaire chargée de chlorure de sodium, de sels de calcium, de sels de fer et de bactéries.

Le procédé comprend une étape d'électrolyse et une ou plusieurs étapes de traitement par l'ajout de réactifs chimiques. En production l'injection d'air s'effectue après électrolyse

Par le document GB-A-825629, on connaît une méthode pour épurer par électrolyse des eaux d'égout riches en phosphates. La méthode nécessite l'ajout de sels magnésiens en vue de précipiter les phosphates sous forme de composés magnésiens. L'air introduit par barbotage sert uniquement à la séparation des phosphates et des hydroxydes par flottation.

Le document US-A-4948489 décrit un appareil de traitement des eaux par électrolyse, dans lequel des métaux sont précipités sous forme d'hydroxydes en vue de récupérer des sels basiques, entre autre du zinc. L'appareil comporte une cellule d'électrolyse divisée en deux compartiments distincts par des diaphragmes. La méthode nécessite un ajout de fluorures pour précipiter des cristaux complexes de divers métaux qui ne sont pas séparés les uns des autres.

La présente invention propose dans ce but, un procédé du type décrit dans le préambule de la revendication 1 ci-jointe. Ce procédé permet de récupérer séparément de nombreux métaux et d'autres composés présents dans la matière décantée.

La mise en oeuvre de la méthode consiste à précipiter les hydroxydes métalliques en agissant sur le pH de l'eau, en tenant compte des possibilités de formation d'un précipité. Précipiter des métaux sous forme d'hydroxydes signifie que l'on utilise des ions OH$^-$, c'est-à-dire des ions "intrinsèques" de l'eau.

Outre la précipitation de métaux lourds par formation d'hydroxydes, il y a encore d'autres formes de précipitations. Précipiter des métaux sous forme de carbonates, sulfates, sulfures veut dire que des ions $CO_3^{--}$, $SO_4^{--}$, $S^{--}$ doivent être utilisés. Ceux-ci sont des ions "étrangers" à l'eau.

Des ions métalliques $Me^{n+}$ peuvent être éliminés de solution aqueuse par précipitation sous forme d'hydroxydes :

$$Me^{n+} + nOH^- \rightarrow Me(OH)_n \downarrow$$

Rendre insolubles des hydroxydes $Me(OH)_n$ est une simple question de pH.

Les solutions de pratiquement tous les métaux lourds, sous forme d'hydroxydes, présentent une réduction prononcée de leur solubilité à pH croissant. La constante d'équilibre qui régit l'équation susdite est la constante de dissociation ou le produit de solubilité. Les valeurs de la constante de dissociation (ou produit de solubilité)

$$K_s = [Me^{n+}] [OH^-]^n$$

sont par exemple :

| Ba$^{++}$ | Ba(OH)$_2$ | $K_s = 2.55 \times 10^{-4}$ | $\log K_s = -3.593$ |
|---|---|---|---|
| Ca$^{++}$ | Ca(OH)$_2$ | $K_s = 4.68 \times 10^{-6}$ | $\log K_s = -5.3298$ |
| Cd$^{++}$ | Cd(OH)$_2$ | $K_s = 5.27 \times 10^{-15}$ | $\log K_s = -14.278$ |
| Co$^{++}$ | Co(OH)$_2$ | $K_s = 1.09 \times 10^{-15}$ | $\log K_s = -14.9626$ |
| Fe$^{++}$ | Fe(OH)$_2$ | $K_s = 4.87 \times 10^{-17}$ | $\log K_s = -16.3135$ |
| Fe$^{+++}$ | Fe(OH)$_3$ | $K_s = 2.64 \times 10^{-39}$ | $\log K_s = -38.578$ |
| Hg$^{++}$ | Hg(OH)$_2$ | $K_s = 3.13 \times 10^{-26}$ | $\log K_s = -25.504$ |
| Mg$^{++}$ | Mg(OH)$_2$ | $K_s = 5.61 \times 10^{-12}$ | $\log K_s = -11.251$ |
| Mn$^{++}$ | Mn(OH)$_2$ | $K_s = 2.06 \times 10^{-13}$ | $\log K_s = -12.686$ |
| Ni$^{++}$ | Ni(OH)$_2$ | $K_s = 7.47 \times 10^{-16}$ | $\log K_s = -15.127$ |
| Pb$^{++}$ | Pb(OH)$_2$ | $K_s = 1.42 \times 10^{-20}$ | $\log K_s = -19.843$ |
| Sn$^{++}$ | Sn(OH)$_2$ | $K_s = 5.45 \times 10^{-27}$ | $\log K_s = -26.264$ |
| Zn$^{++}$ | Zn(OH)$_2$ | $K_s = 7.71 \times 10^{-17}$ | $\log K_s = -16.113$ |

Pour des raisons pratiques, on utilise souvent le logarithme négatif de la constante de dissociation.

Les méthodes que l'on a appliquées jusqu'à présent pour augmenter le pH, reviennent à une transformation chimique au cours de laquelle des produits chimiques sont mis en oeuvre.

Les substances éliminées de l'eau donnaient lieu à un résidu de décantation (boue, gâteau de filtration, sédiment) et à de nouveaux problèmes au sujet de la pollution à la surface et à l'intérieur du sol.

En outre, il n'existe pas une seule méthode tant soit peu efficace à ce jour pour récupérer les matières présentes dans la boue.

La présente invention a pour but de remédier à ces inconvénients. Elle propose un procédé et un dispositif pour préparer des hydroxydes de métaux sous forme solide par électrolyse d'une solution aqueuse riche en métaux.

L'idée qui est suivie, consiste à former les ions OH$^-$ indispensables par réduction d'oxygène.

$$O_{2g} + 2H_2O_{liq} + 4\,e \rightarrow 4\,OH^-$$

La réduction de l'oxygène possède une valeur E = 1,23 V - 0,059 pH et doit avoir lieu à la cathode. Le potentiel de la cathode doit être supérieur à 1,23 V - 0,059 pH. Cela implique que le potentiel de l'anode doit évidemment être encore plus élevé.

Au cours de l'électrolyse classique de l'eau, on dispose d'une anode à 1,23 V - 0,059 pH et une cathode à O.V - 0,059.pH. Une telle électrolyse est inappropriée.

On résout le problème comme suit :

** Dans une cellule d'électrolyse divisée en deux compartiments qui sont séparés l'un de l'autre par une électrode bipolaire, on applique une tension (de U Volt) entre une anode (+) et une cathode (-).

Le côté de l'électrode bipolaire dirigé vers la cathode est polarisé à + U/2 volt et le côté de l'électrode bipolaire orienté vers l'anode à - U/2 volt, de sorte que le potentiel de la cathode (-) est augmenté jusqu'à un niveau arbitrairement choisi. Dans le compartiment cathodique on introduit de l'air ou de l'oxygène par barbotage le long de la cathode.

Grâce à l'électrolyse de l'eau, l'oxygène est soumis à une réduction et transformé en ions OH$^-$.

Suivant une particularité de l'invention, des diaphragmes sont placés des deux côtés cités de l'électrode bipolaire.

Suivant les circonstances, on peut éliminer les ions nitrates et chlorures.

\* Les ions NO$_3^-$ devraient libérer N$_2$ et O$_2$,

N$_2$ à la cathode par réduction des ions nitrates en azote :

$$2NO_3^- + 12\,H^+ + 10e \rightarrow N_{2g} + 6H_{2g} + 6H_2O_{liq}$$

et O$_2$ à l'anode selon la réaction d'oxydation :

$$2NO_3^- \rightarrow 3O_{2g} + N_{2g} + 2e.$$

On a aussi constaté expérimentalement l'élimination de chlore avec formation de OCl⁻, qui est ensuite transformé en Cl₂, qui est libérée à l'anode selon l'équation suivante :

$$2OCl^- + 2H^+ + 2e \rightarrow Cl_2 + 2H_2O_{liq.}$$

à la cathode outre l'oxydation

$$2OCl^- \rightarrow Cl_2{}^g + 2e$$

à l'anode

L'invention concerne également une cellule d'électrolyse, divisée en deux compartiments qui sont séparés l'un de l'autre par une électrode bipolaire, par exemple un conducteur qui est polarisé en tant que cathode du côté qui est orienté vers l'anode, et qui est polarisé en tant qu'anode de l'autre côté, orienté vers la cathode. Dans le compartiment de la cathode, on prévoit une ouverture pour l'introduction d'air où d'oxygène par barbotage le long de la cathode.

La mise en oeuvre d'électrodes bipolaires n'est cependant pas limité à une seule dans une cellule d'électrolyse. Une cellule multiple comprenant un certain nombre d'électrodes bipolaires et de diaphragmes peut être également utilisé.

Ces caractéristiques et d'autres particularités et détails de l'invention apparaîtront au cours de la description suivante, faisant référence aux dessins ci-joints, qui illustrent à titre d'exemple non limitatif une forme de réalisation de l'invention.

Dans ces dessins :

- la figure 1 est une coupe verticale d'une cellule d'électrolyse simple suivant l'invention ;
- la figure 2 est une coupe verticale d'une cellule d'électrolyse multiple suivant l'invention, et

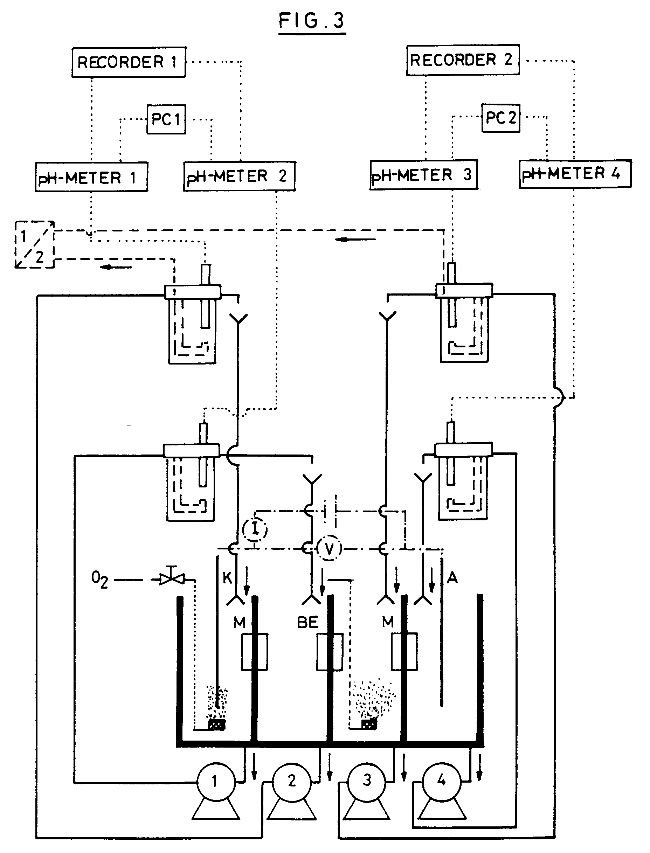

- la figure 3 représente schématiquement une cellule d'électrolyse multiple du type illustré dans la figure 2.

Dans ces figures, les mêmes signes de référence désignent des éléments identiques ou analogues.

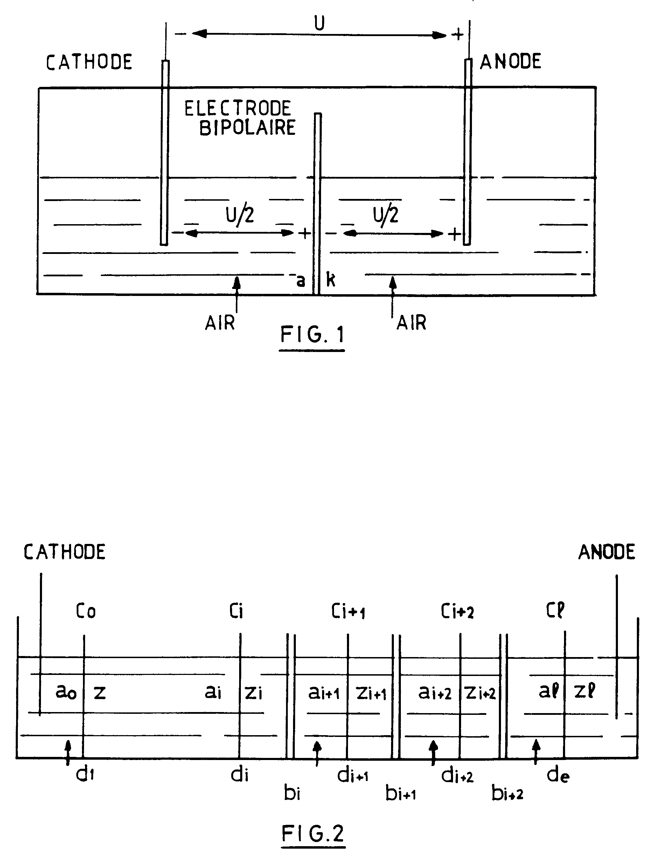

La figure 1 est une figure de principe. Elle montre une électrode bipolaire disposée entre une cathode et une anode. Les diaphragmes sont placés des deux côtés de l'électrode bipolaire mais ils ne sont pas représentés.

Le choix des matériaux de l'électrode porte particulièrement sur l'électrode bipolaire. En effet, l'électrode bipolaire est polarisée anodiquement d'un côté, et cathodiquement de l'autre. La face anodique doit permettre les réactions d'oxydation, sans être altérée, par exemple par Cl⁻, Cl₂, $SO_4{}^{2-}$, $NO_3^-$. La face cathodique doit résister aux réactions de réduction de H⁺ et de tous les cations en solution.

Toutefois, cela ne veut pas dire qu'un seul et même matériau doit être choisi pour la face anodique et la face cathodique. Il suffit que chaque face de l'électrode bipolaire soit adaptée à son rôle : l'anode ou la cathode, c'est-à-dire réaction d'oxydation ou de réduction, ou polarisée + et -. Des électrodes du type mixte (comprenant un métal A d'un côté et un métal B de l'autre côté) ou du type triple couche (A et B, porté par un support intermédiaire C) sont adaptés au but recherché.

L'aluminium semble bien avoir une chance de convenir, qui dépend de l'état de surface. Il s'avère en effet qu'une surface lisse semble avoir une durée de vie suffisante, après passivation grâce à la formation d'une couche d'oxydation de recouvrement.

Le comportement électrochimique des métaux aux divers potentiels (qui entrent en ligne de compte ici) n'est pas connu. La découverte du matériau idéal est donc un problème expérimental ou empirique. Des divers tests, il ressort que l'argent ne convient pas comme métal pour l'électrode.

Comme métal d'électrode l'or semble bien convenir parfaitement. Dans ce but, il suffit qu'une couche d'or superficielle soit présente sur un support.

En outre, il n'est pas nécessaire que A et/ou B soient réellement des surfaces métalliques. Ainsi, dans le cas de l'aluminium par exemple, la couche superficielle est composée de $Al_2O_3$, AlOOH (Böhmite), $Al(OH)_3$. De manière analogue une couche superficielle de plomb se couvrira de $PbO_2$, ou de $PbSO_4$.

Les métaux et les alliages qui entrent en ligne de compte pour la réalisation des électrodes sont déterminés par voie empirique. Au cours de la recherche un grand nombre de métaux d'alliages ont été utilisés en raison de la grande diversité dans la composition des solutions à traiter (solution aqueuse comprenant des ions).

La composition varie :

*    selon les anions et les cations (inclusivement H⁺, donc pH) ;
*    selon les concentrations de tous les ions ;
*    selon la température.

En outre, la composition n'est pas constante dans le temps au cours de l'électrolyse, vu que le but consiste à éliminer les ions de l'eau. En particulier on a recherché si les métaux, alliages, couches de recouvrement à la surface des électrodes, restent stables dans des conditions changeantes, et si par ailleurs ils sont conducteurs de l'électricité.

La liste qui suit n'est donc pas exhaustive, elle ne prétend être donnée qu'à titre illustratif :

| 1) | or | |
|---|---|---|
| 2) | argent | |
| 3) | aluminium | * non passivé |
| | | * après oxydation anodique |
| | | * après oxydation et colmatage de la couche d'oxydation |
| 4) | fer | |
| 5) | fer | * après bleutage (formation de $Fe_3O_4$) |
| | | * après bleuissage et imprégnation d'huile (afin de boucher les pores restants au moyen d'un dépôt de carbone dû à un craquage d'huile à température élevée) |
| 6) | acier inoxydable | * comprenant du chrome et du nickel |
| 7) | Inconel® | |
| 8) | carbone (graphite) | * plaque |
| | | * tige |
| | | * fibres également des métaux recouverts d'une mince couche de stéarine. |

## Exemple 1 : application sur une eau résiduaire

Un premier exemple d'application du procédé selon l'invention est le traitement d'eau polluée par des sulfates. Dans ce cas, la solution aqueuse chargée de sel est introduite dans le compartiment cathodique et soumise à une électrolyse, et les hydroxydes précipités sont éliminés des filtres.

Après traitement il reste des ions sulfates excédentaires dans l'électrolyte cathodique. Celui-ci peut être éventuellement neutralisé et précipité sous forme de $CaSO_4$ ($K_s$ de $CaSO_4$ = $7,1.10^{-5}$).

Au cours de l'électrolyse, de l'oxygène également est libéré à la surface de l'anode, et de l'hydrogène sur la face cathodique de l'électrode bipolaire. Les deux gaz sont captés par un système à cloche. En outre, l'oxygène qui est formé à la surface de l'anode peut être amené dans le compartiment de la cathode pour être transformé en $OH^-$.

En cas de nécessité d'autres métaux (V, Mo, W, Sb) peuvent être précités comme oxydes dans le compartiment de l'anode et être éliminés de la sorte.

Il est tout aussi concevable d'amener $H_2$ et $O_2$ dans une pile à combustion pour en retirer de l'énergie électrique qui peut être utilisée comme source de potentiel.

## Exemple 2 : Application au réseau d'eau (eau de ville)

Au cours d'un test avec de l'eau de distribution (eau de ville du réseau de distribution de Gand), il s'est avéré immédiatement que le procédé avait entraîné l'élimination des chlorures : les ions $Cl^-$ sont oxydés à l'anode en chlore gazeux.

Pour une densité de courant de comprise entre 0,3 et 0,4 Ampèxe, sous une tension de 32 Volts, on a pu atteindre des valeurs de pH de 3 dans le compartiment de l'anode et de 12 dans le compartiment de la cathode, avec des électrodes en or, et cela endéans les 5 minutes.

## Exemple 3 : Elimination sélective

Auparavant déjà, l'attention a été attirée sur le fait que la solubilité de beaucoup d'hydroxydes atteint une valeur minimale pour une valeur typique du pH. Il est donc important d'obtenir une série de pH lors de l'épuration fractionnée d'une eau polluée.

Ceci est rendu possible de la manière suivante :

A l'anode, il y a acidification jusqu'à pH 3-3,5. A la cathode, il y a alcalinisation jusqu'à pH 13, ou davantage.

Dans le compartiment intermédiaire entre les diaphragmes, le pH varie entre 7 et 10 selon l'endroit. Cela signifie que la forme de réalisation comprenant un certain nombre d'électrodes bipolaires et un diaphragme entre chaque paire d'électrodes consécutives permet d'obtenir une série d'électrolytes avec des pH compris entre 3 et 13. Il peut se former un précipité d'un ou plusieurs hydroxydes dans chaque compartiment.

Le filtrage d'un premier électrolyte cathodique comprenant la séparation des hydroxydes qui sont précités et le transport dans le compartiment suivant, où le pH est plus élevé, afin de précipiter un second hydroxyde, et ainsi de suite, offre la possibilité de réaliser une séparation fractionnée des précipités d'hydroxydes.

Courant d'électrolyse

La réaction d'électrolyse est

$$O_{2g} + 2H_2O_{liquide} + 4e \rightarrow 4OH^-$$

Il se forme $OH^-$ de nombre équivalent 1 ($1OH^-$ pour 1 électron) et masse équivalente 17.
La masse de $OH^-$ produit est donnée par l'équation :

$$m_{OH} = \frac{1}{96.500} \, 17.I.t$$

dans laquelle I est exprimée en ampères et t en secondes. Le nombre d'équivalents $OH^-$ est égal à :

$$\frac{m_{OH}^-}{17} = \frac{I.t}{96.500}$$

Lorsque I = 0,35, on obtient par seconde $\frac{0,35}{96.500} = 3,627.10^{-6}$ équivalents.

Une durée d'électrolyse de 5 minutes, ou 300 secondes donne $1.088.10^3$ équivalent $OH^-$. Dans 1 litre de solution cela constitue :

$(OH^-)$ = $1,088.10^{-3}$ mole/l
$-\log OH^-$ = $-0,0366 + 3 = 2,9633 = pOH$
$pOH$ = $14 - pH \rightarrow pH = 11,0367$

Cela correspond aux observations.

Lorsqu'il s'agit de cations $Me^{2+}$ qui peuvent précipiter sous forme de $Me(OH)_{2,s}$ et lorsque la concentration $(Me^{2+})$ = 0.1 mole/l, alors il faut produire 0.2 mole/l de $OH^-$.

$$\frac{0.2}{1,0088.10^{-3}} \, 5 = 0,92.10^{-3}$$

minutes ou 16.66 heures.

Lorsque la concentration $(Me^{2+})$ = $10^{-3}$ mole/l et l'intensité du courant 1 ampère, alors il s'avère nécessaire :

$$2.10^{-3} \text{ mole/l de OH } \frac{1 \text{ A. } t}{96.500} = 2.10^{-3} \rightarrow t = 2.10^{-3}. 96500 \text{ sec} = 193 \text{ sec. ou } 3,2166 \text{ minutes.}$$

Evaluons maintenant les cellules, avec 0,35 A, comme si elles avaient une électrode de 1 $dm^2$ de surface, il faudrait alors pour une intensité I = 1A , une surface de 1 : 0,35 $dm^2$ = 3,333 $dm^2$.

La réluctance du circuit électrique fait en sorte que toutes les cellules $C_i$ soient traversées par la même intensité de courant.

La densité de courant peut varier lorsqu'on adapte la surface des électrodes bipolaires (b ).

Sur la face cathodique de chaque électrode bipolaire, l'aération peut entraîner la formation d'ions $OH^-$ ($\uparrow$).

Si on s'impose l'idée que le pH par exemple, atteint sa valeur la plus élevée dans la cellule de la cathode principale, et sa valeur la plus basse dans celle de l'anode principale, et que les valeurs de pH varient entre les deux électrodes de haut en bas dans la direction de la flèche →, cela signifie que les zones désignées par a ($a_0$.,...) sont rendues alcalines, les zones désignées par Z ($Z_1$...$Z_1$ ) acides.

La pratique qui en découle est que, lorsque $a_0 > a_1 > a_2 > ..... > a_i > .... > a_0$, la précipitation sélective des hydroxydes peut avoir lieu en amenant la solution dans la cellule $C_{i+2}$, dans le compartiment partiel $a_{i+2}$, de sorte que pour la valeur de pH dans le compartiment $a_{i+2}$, les hydroxydes qui se déposent au pH le plus bas précipitent, et en amenant la solution du premier hydroxyde, après filtration, dans la cellule $C_{i+1}$, compartiment partiel $a_{i+1}$, où la précipitation d'hydroxyde suivante peut avoir lieu.

A titre illustratif, et uniquement en ce qui concerne des cations bivalents, cela s'effectuerait selon l'ordre
Ba, Ca, Mg, Mn, Co, Cd, Ni, Zn, Fe, Pb, Hg
au cas où les concentrations en cations seraient identiques lors de leur introduction.

Dans une orientation inversée dans laquelle les valeurs de pH sont décroissantes, par exemple selon l'ordre $Z_1$....$Z_2$... l'introduction peut se faire en $Z_1$ passant ensuite à $Z_2$, pour terminer dans $Z_1$.

En même temps l'écoulement total pour la solution à purifier peut être :

$Z_1$...$Z_1$, $al_1$.....$a_0$.

## Phénomène d'électrolyse particulier

Partant de solutions riches en métal, qui en outre sont très acides, on a constaté que sur les cathodes, à savoir sur la face de la cathode principale et la face cathodique des électrodes bipolaires, des dépôts de métal apparaissent, par exemple des dépôts de zinc métallique. Ces dépôts avaient lieu dans des électrolytes qui en électrométallurgie classique ne donnent aucune électro-cristallisation. Le fait que ces dépôts, partiellement lisses, partiellement rugueux avec des effets marginaux (formation de protubérances) adhérant en tout ou en partie, sont formés dans l'électrolyse, est le résultat des situations même : densité de courant, polarisation élevée, polarisation d'hydrogène et autres.

Cela signifie que le traitement d'un électrolyte dans une installation s'effectue en deux étapes :

a) un dépôt de métal (métaux) sur la (les) cathode(s) ;
b) ensuite,l'élimination des cations exédentaires par formation de précités et d'hydroxydes.

Il faut remarquer ici, qu'en cas de dépôt métallique, l'augmentation du pH se produit avec retard. En effet, lorsque $MeSO_4$, complètement dissous en solution aqueuse, conduit au cours de la première phase, au dépôt du métal selon l'équation suivante :

$$Me^{2+} + 2e \rightarrow Me_s,$$

les ions $SO_4^{2-}$ se transforment en $HSO_4^-$ et la solution est acidifiée, proportionnellement au dépôt de $Me_v$. L'acidification contribue à freiner l'augmentation de pH, en consommant des ions $OH^-$.

$$MeSO_{4sol.} + 2e \rightarrow Me_s + SO_4^{2-}$$

$$SO_4^{2-} + H_2O_{sol.} \rightarrow H_2SO_{4sol.} + 1/2\ O_{2g} + 2e$$

$$H_2SO_{4sol} + 20H^- \rightarrow SO_4^{2-} + 2H_2O_{liq.}$$

## Précipitation d'autres composés

Dans un électrolyte dans lequel sont également présents des anions comme des sulfures ($S^{2-}$), des sulfates ($SO_4^{2-}$), des chlorures ($Cl^-$), des carbonates ($CO_3^{2-}$), d'autres hydroxydes que ceux généralement formés, peuvent également précipiter au cours de l'électrolyse, comme des carbonates basiques, des carbonates,... Nous en mentionnons un certain nombre (la liste n'est pas exhaustive), des sulfures, sulfates, oxychlorures et bien d'autres n'étant pas mentionnés, afin de garder le tableau limité. Outre $Ca(OH)_2$, $Ba(OH)_2$, $CaCO_3$, $BaCO_3$, citons :

| Composé | Masse modulaire | Forme cristallo- graphi- que | Nom |
|---|---|---|---|
| $CdCO_3$ | 172,42 | w Te | |
| $Cd(OH)_2$ | 162,42 | w Tr ou Am | |
| $CoCO_3$ | 118,94 | r Tr | |
| $2CoCo_3.3CO(OH)_2.H_2O$ | 534,74 | r-v P | |
| $Cu_2CO_3$ | 187,1 | ge | |
| $CuCO_3.Cu(OH)_2$ | 221,12 | gro Mo | MALACHITE |
| $2CuCO_3.Cu(OH)_2$ | 344,67 | bl Mo | AZURITE |
| $CuSO_4.3Cu(OH)_2$ | 452,29 | gro Mo | BROCHANTITE |
| $FeCO_3$ | 115,86 | gri Tr | SIDERITE |
| $FeCO_3.H_2O$ | 113,87 | kl | |
| $PbCO_3$ | 267,21 | kl Rh | CERUSSITE |
| $PbCO_3.Pb(OH)_2$ | 775,63 | w He | HYDROCERUSSITE |
| $MgCO_3.Mg(OH)_2.3H_2.O$ | 196,68 | w Rh | ARTINITE |
| $3MgCO_3.Mg(OH)_2.3H_2O$ | 365,31 | w Rh | HYDORMAGNESITE |
| $MgCO_3.5H_2O$ | 174,39 | w Mo | LANSFORDITE |
| $MgCO_3.3HO$ | 138,36 | kl Rh | NESQUEHORNITE |
| $MnCO_3$ | 114,95 | ro Rh | RHODOCROSITE |
| $Hg_2CO_3$ | 461,19 | ge - br | |
| $HgCO_3.2HgO$ | 693,78 | br - r | |
| $NiCO_3$ | 118,70 | lgro Rh | |
| $2NiCO_3.3Ni(OH)_2.4H_2O$ | 587,57 | lgro Rh | |
| $Ag_2CO_3$ | 275,75 | ge | |
| $ZnCO_3$ | 125,39 | kl Tr | SMITHSONITE |

avec
bl = bleu
br-r = brun-rouge
ge = jaune
ge-br = jaune-brun
gri = gris
gro = vert
kl = incolore
lgro = vert pâle
r = rouge
r-v = rouge-violet
ro = rose
w = blanc.
Am = amorphe
He = hexagonale
K = cubique
Mo = monoclinique
P = prismatique
Rh = rhombique
Te = tetragonale
Tr = trigonale

La naissance ou non de soi-disant carbonates alcalins dépend de la présence du $CO_2$, dans la solution (électrolyte). Dans l'atmosphère habituelle, dans lequel du $CO_2$ est présent, cette formation peut apparaître. Si l'on travaille avec de l'oxygène pur, au lieu d'air, c'est-à-dire en absence de $CO_2$, il ne se forme pas de carbonates alcalins.

Formation d'hydroxydes purs

Suivant que l'on parte d'une solution de départ pure ou d'un mélange de composés métalliques dissous, on obtient comme précité soit un hydroxyde pur, un mélange d'hydroxydes ou des hydroxydes purs. Dans ce dernier cas, l'hydroxyde métallique pur qui se dépose à la valeur de pH la plus basse précipitera en premier lieu. Ensuite un précipité constitué d'un mélange apparaît. Le précipité pour lequel la valeur de pH la plus élevée est exigée, se dépose en dernier lieu.

Tout cela n'empêche pas qu'un ou plusieurs composés métalliques ne se déposent ou ne puissent se déposer .

Les dépôts de métaux sur les faces de la cathode, d'hydroxydes et d'autres composés comme précipités dans les électrolytes, sont formés dans le compartiment cathodique, et également dans les compartiments intermédiaires compris entre la face cathodique de la ou des électrode(s) bipolaire(s) et le ou les diaphragme(s).

En ce qui concerne les diaphragmes, il suffit de prendre une étoffe dont le tissage est serré. Un tel drap a une durée de vie presqu'illimité en milieu acide et en milieu alcalin.

Pour les récipients, les conduites de circulation de l'électrolyte vers les cellules de mesure pour la mesure du pH et analogue , pour les pompes, les filtres, les boulons au moyen desquels les diaphragmes et les électrodes bipolaires sont fixés par le biais d'anneaux sur leurs support, on n'utilise que des matières synthétiques courantes du type perspex pour plaques rigides, anneaux , du PVC pour les conduites, nylon,... pour les écrous, etc....

Les électrodes bipolaires et les diaphragmes sont montés étanches à l'eau au moyen d'anneaux en caoutchouc.

Les surfaces filtrantes sont réalisées en matière synthétique ou en laine-coton classique.

Au cours de l'électrolyse, la formation d'un précipité de $CaSO_4$ est égale à $7,1.10^{-5}$. Cela entraîne que, lorsque l'activité du $SO_4^{2-}$ croît dans la solution, un précipité de $CaSO4_2$ peut se former à des concentrations en $Ca^{++}$ inférieures.

L'augmentation de ($SO_4^{2-}$) apparaît par exemple, lorsque, dû à une élévation du pH la réaction

$$HSO_4^- \rightarrow H^+ + SO_4^{2-}$$

se poursuit vers la droite, lorsque le pH monte en raison de la production de $OH^-$, cela entraîne la capture de $H^+$ et la formation d'eau, et la libération de $SO_4^{2-}$). En particulier dans la solution de sulfate métallique, la précipitation du $CaSO_4$ s'opère rapidement.

**Revendications**

**1.** Procédé pour épurer une eau usée en vue d'éliminer des composés métalliques par électrolyse, dans lequel on fait passer un courant électrique , par conduction ionique entre une anode (+) et une cathode (-) plongeant dans ladite eau enrichie d'oxygène par barbotage d'air ou d'oxygène, caractérisé en ce qu'on divise la cellule d'électrolyse en deux compartiments, par une électrode bipolaire et on place des deux côtés de l'électrode bipolaire, un diaphragme qui divise les deux compartiments de la cellule d'électrolyse en cellules multiples et en ce que l'on forme des ions $OH^-$ au niveau de la cathode (-) dans le compartiment cathodique par réduction d'oxygène par électrolyse.

**2.** Procédé selon la revendication 1, caractérisé en ce qu'on soumet l'oxygène amené dans la solution aqueuse à une réduction par électrolyse et transforme celui-ci en ions $OH^-$ sous les conditions suivantes :

- on crée une différence de potentiel de U Volt entre une anode (+) et une cathode (-);

- la cellule d' électrolyse est divisée en deux compartiments qui sont séparés l'un de l'autre par une électrode bipolaire;

- le côté de l'électrode bipolaire dirigé vers la cathode est polarisé à + U/2 Volt et le côté de l'électrode bipolaire orienté vers l'anode à - U/2 Volt, de sorte que le potentiel de la cathode (-) est augmenté à un niveau arbitrairement choisi;

- dans le compartiment cathodique, on fait barboter de l'air le long de la cathode.

3. Procédé selon la revendication 2, caractérisé en ce que des diaphragmes sont disposés des deux côtés de l'électrode bipolaire.

4. Procédé selon l'une quelconque des revendications précédentes, caractérisé en ce qu'on effectue une épuration fractionnée d'une eau usée en conduisant l'eau successivement dans une série de compartiments cathodiques et anodiques dans lesquels des valeurs de pH croissantes sont obtenues progressivement de sorte que les hydroxydes métalliques précipitent dans l'ordre de leur constante de dissociation dans les compartiments cathodiques successifs et sont éliminés par filtration.

5. Dispositif pour préparer des hydroxydes métalliques solides, comprenant :

    - une cellule d'électrolyse, divisée en deux compartiments séparés l'un de l'autre par une électrode bipolaire, qui est polarisée cathodiquement du côté orienté vers l'anode, et polarisée anodiquement du côté opposé, orienté vers la cathode;
    caractérisé en ce qu'il comprend également:
    - des moyens pour l'introduction d'air ou d'oxygène dans le compartiment cathodique le long de la cathode;
    - des diaphragmes disposés des deux côtés de l'électrode bipolaire et qui divisent les deux compartiments de la cellule d'électrolyse en cellules multiples

6. Dispositif selon la revendication 5, caractérisé en ce qu'une ouverture est prévue dans le compartiment cathodique pour l'introduction d'air par barbotage le long de la cathode.

7. Dispositif selon la revendication 5 ou 6, caractérisé en ce que l'électrode bipolaire est réalisée en un métal ou un alliage quelconque, en particulier en aluminium ou un alliage d'aluminium.

8. Dispositif selon l'une quelconque des revendications 5 à 7, caractérisé en ce que l'électrode bipolaire présente une surface lisse dont on augmente la longévité par passivation due à la formation d'une couche de recouvrement d'oxydation.

## Claims

1. Process for purifying waste water with the aim of eliminating metal compounds by electrolysis, wherein an electric current is passed by ion conduction between an anode (+) and a cathode (-) immersed in said water which is enriched with oxygen by bubbling in air or oxygen, characterised in that the electrolysis cell is divided into two compartments by a bipolar electrode and a diaphragm dividing the two compartments of the electrolysis cell into multiple cells is placed on both sides of the bipolar electrode, and in that OH$^-$ ions are formed at the cathode (-) in the cathode compartment by oxygen reduction by electrolysis.

2. Process according to claim 1, characterised in that the oxygen introduced into the aqueous solution is subjected to reduction by electrolysis and converted into OH$^-$ ions under the following conditions:

    a difference in potential of U volts is created between an anode (+) and a cathode (-);
    the electrolysis cell is divided into two compartments which are separated from one another by a bipolar electrode;
    the side of the bipolar electrode facing the cathode is polarised at + U/2 volts and the side of the bipolar electrode facing the anode is polarised at - U/2 volts, so that the potential of the cathode (-) is increased to an arbitrarily chosen level;
    in the cathode compartment, air is bubbled along the cathode.

3. Process according to claim 2, characterised in that diaphragms are placed on both sides of the bipolar electrode.

4. Process according to any of the preceding claims, characterised in that fractionated purification of waste water is carried out by conducting the water successively into a series of cathode and anode compartments in which increasing pH values are obtained progressively, so that the metal hydroxides are precipitated in the order of their dissociation constant in the successive cathode compartments and are eliminated by filtering.

5. Apparatus for preparing solid metal hydroxides, comprising:

    an electrolysis cell divided into two compartments separated from each other by a bipolar electrode, which is polarised cathodically on the side facing the anode and polarised anodically on the opposite side, facing the cathode;

characterised in that it also comprises:

means for introducing air or oxygen into the cathode compartment along the cathode;

diaphragms arranged on both sides of the bipolar electrode, which divide the two compartments of the electrolysis cell into multiple cells.

6. Apparatus according to claim 5, characterised in that an opening is provided in the cathode compartment for introducing air by bubbling it along the cathode.

7. Apparatus according to claim 5 or 6, characterised in that the bipolar electrode is made of any metal or alloy, particularly aluminium or an aluminium alloy.

8. Apparatus according to any one of claims 5 to 7, characterised in that the bipolar electrode has a smooth surface the life of which is increased by passivation resulting from the formation of an oxidised covering layer.

**Patentansprüche**

1. Verfahren zum Reinigen von gebrauchtem Wasser im Hinblick auf die Eliminierung metallischer Verbindungen durch Elektrolyse, bei dem man einen elektrischen Strom durch ionische Leitung zwischen einer Anode (+) und einer Kathode (-) fließen läßt, die in das genannte Wasser hineinragen, welches durch Einblasen von Luft oder Sauerstoff mit Sauerstoff angereichert ist, dadurch gekennzeichnet, daß man die Elektrolysezelle durch eine bipolare Elektrode in zwei Abteile unterteilt und daß man auf beiden Seiten der bipolaren Elektrode ein Diaphragma anordnet, welches die beiden Abteile der Elektrolysezelle in multiple Zellen unterteilt und daß man OH$^-$-Ionen im Bereich der Kathode (-) in dem kathodischen Abteil durch Sauerstoffreduktion durch Elektrolyse bildet.

2. Verfahren nach Anspruch 1, dadurch gekennzeichnet, daß man den in die wässrige Lösung eingebrachten Sauerstoff einer Reduktion durch Elektrolyse unterwirft und diesen in OH$^-$-Ionen unter den folgenden Bedingungen transformiert:

   - man schafft eine Potentialdifferenz von U Volt zwischen einer Anode (+) und einer Kathode (-);

   - die Elektrolysezelle ist in zwei Abteile unterteilt, die voneinander durch eine bipolare Elektrode getrennt sind;

   - die der Kathode zugewandte Seite der bipolaren Elektrode ist mit + U/2 Volt und die der Anode zugekehrte Seite der bipolaren Elektrode mit - U/2 Volt polarisiert, derart, daß das Potential der Kathode (-) auf ein willkürlich gewähltes Niveau verstärkt ist;

   - im kathodenseitigen Abtei leitet man Luft längs der Kathode durch.

3. Verfahren nach Anspruch 2, dadurch gekennzeichnet, daß die Diaphragmen auf beiden Seiten der bipolaren Elektrode angeordnet sind.

4. Verfahren nach einem der vorhergehenden Ansprüche, dadurch gekennzeichnet, daß man eine fraktionierte Reinigung eines benutzten Wassers bewirkt, indem man das Wasser sukzessive in eine Reihe von kathodischen und anodischen Abteilen einleitet, in denen anwachsende pH-Werte progressiv erhalten werden, derart, daß die metallischen Hydroxyde in der Reihenfolge ihrer Dissoziationskonstante in den aufeinanderfolgenden kathodischen Abteilen ausgefällt und durch Filtration eliminiert werden.

5. Vorrichtung zur Herstellung von festen Metallhydroxyden umfassend:

   - eine Elektrolysezelle, die in zwei Abteile unterteilt ist, die voneinander durch eine bipolare Elektrode getrennt sind, die auf der zur Anode gekehrten Seite kathodisch polarisiert ist und auf der entgegengesetzten Seite, die der Kathode zugekehrt ist, anodisch polarisiert ist, dadurch gekennzeichnet, daß sie darüber hinaus umfaßt:

   - Einrichtungen zum Einleiten von Luft oder Sauerstoff in das kathodische Abteil längs der Kathode,

   - auf beiden Seiten der bipolaren Elektrode angeordnete Diaphragmen, welche die beiden Abteile der Elektrolysezelle in multiple Zellen unterteilen.

6. Vorrichtung nach Anspruch 5, dadurch gekennzeichnet, daß im kathodischen Abteil eine Öffnung vorgesehen ist zur Einführung von Luft, die längs der Kathode durchgeleitet wird.

7. Vorrichtung nach Anspruch 5 oder 6, dadurch gekennzeichnet, daß die bipolare Elektrode aus einem Metall oder irgendeiner Legierung, insbesondere aus Aluminium oder einer Aluminiumlegierung besteht.

8. Vorrichtung nach einem der Ansprüche 5 bis 7, dadurch gekennzeichnet, daß die bipolare Elektrode eine glatte Oberfläche aufweist, deren Langlebigkeit man durch Passivierung infolge der Bildung einer Oxydationsüberzugs-schicht verstärkt.

FIG. 1

FIG.2

13

FIG.3